# EUROPÄISCHE PATENTSCHRIFT

(11) **EP 0 912 398 B1**
(45) Veröffentlichungstag und Bekanntmachung des Hinweises auf die Patenterteilung: **02.02.2000**
(21) Anmeldenummer: 97916294.8
(22) Anmeldetag: 18.04.1997
(51) Int. Cl.: B65B 23/14, B65G 47/84

(54) **VERFAHREN UND VORRICHTUNG ZUM TRANSPORTIEREN UND GRUPPIEREN VON SCHEIBENFÖRMIGEN PRODUKTEN, INSBESONDERE BISKUITS**
PROCESS AND DEVICE FOR CONVEYING AND FORMING GROUPS OF DISCOID PRODUCTS, IN PARTICULAR BISCUITS
PROCEDE ET DISPOSITIF POUR TRANSPORTER ET GROUPER DES PRODUITS DISCOIDES, NOTAMMENT DES BISCUITS

(30) Priorität: 29.04.1996 CH 107396
(43) Veröffentlichungstag der Anmeldung: 06.05.1999
(73) Patentinhaber: SIG Pack Systems AG, 8222 Beringen (CH)
(72) Erfinder: STRASSER, Thomas, CH-8463 Benken (CH); WALZ, Theo, CH-8213 Neunkirch (CH)
(74) Vertreter: Münch, Otto, Dipl.-Ing.
(86) Internationale Anmeldenummer: CH9700154
(87) Internationale Veröffentlichungsnummer: WO9741034

(56) Entgegenhaltungen:
- CH-A- 641 416
- DE-A- 2 421 630

## Beschreibung

Aus der CH-PS 641 416 ist ein Verfahren und eine Vorrichtung gemäss Oberbegriff der Ansprüche 1 und 2 zum Transportieren und Gruppieren von Biskuits bekannt. Die Biskuits werden in mehreren Kolonnen angeliefert und auf Mitnehmer eines Förderrades übergeben. Die Mitnehmer sind auf dem Rad schwenkbar. Sie schieben die Biskuits durch Führungen in einer Ausgangsstation, auf welcher auf weiteren Führungen Gruppen von flachseitig aneinanderliegenden Biskuits gebildet werden, welche mittels eines periodisch bewegten Schiebers weitertransportiert werden. Das Gleiten der Biskuits in den Führungen verursacht Abrieb. Eine ähnliche Vorrichtung ist in der CH-PS 664 126 beschrieben.

Der vorliegenden Erfindung liegt die Aufgabe zugrunde, ein Verfahren und eine Vorrichtung dieser Art anzugeben, bei welchem die Relativbewegungen zwischen den Produkten und Führungen minimiert ist, so dass die Produkte schonend gehandhabt werden. Diese Aufgabe wird durch die Merkmalskombination der Ansprüche gelöst.

Nachfolgend werden Ausführungsbeispiele der Erfindung anhand der Zeichnungen erläutert. Darin zeigt:
- Fig.1 und 2: eine schematische Seitenansicht und eine Draufsicht auf die Vorrichtung,
- Fig.3 und 4: eine etwas detailliertere Darstellung entsprechend Figuren 1 und 2 einer Variante,
- Fig. 5: eine Darstellung entsprechend Figur 3 einer weiteren Variante, und
- Fig. 6: die eine Hälfte eines Axialschnittes durch das Förderrad.

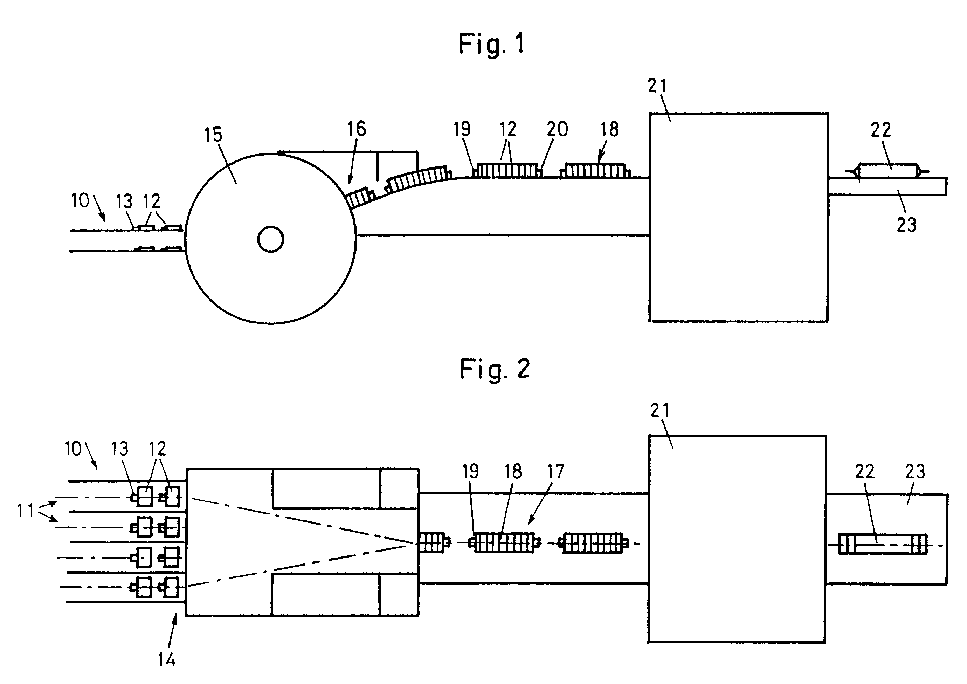

Bei der Ausführungsform nach Figuren 1 und 2 werden von einem Zufuhrförderer 10 in regelmässigen Abständen vier Kolonnen 11 scheibenförmiger Produkte 12 z.B. mittels Schiebern 13 angeliefert. In einer Eingangsstation 14 werden sie auf ein Transportrad 15 übergeben. Bei der Eingangsstation 14 haben die vier nebeneinander angeordneten Bahnen des Förderers 10 unterschiedliche Höhen. Beim Transport im Rad 15 zur Ausgangsstation 16 werden die Produkte 12 gegeneinander geschoben, so dass eine einzige Ausgangskolonne 17 gebildet wird. In der Ausgangstation 16 werden Gruppen 18 von flachseitig aneinanderliegenden Produkten 12 gebildet, welche mit Schiebern 19 und Gegenhaltern 20 einer Verpackungsmaschine 21 zugeführt werden. In der Maschine 21 werden die Gruppen 18 verpackt. Die fertigen Packungen 22 werden auf einem Förderer 23 abtransportiert.

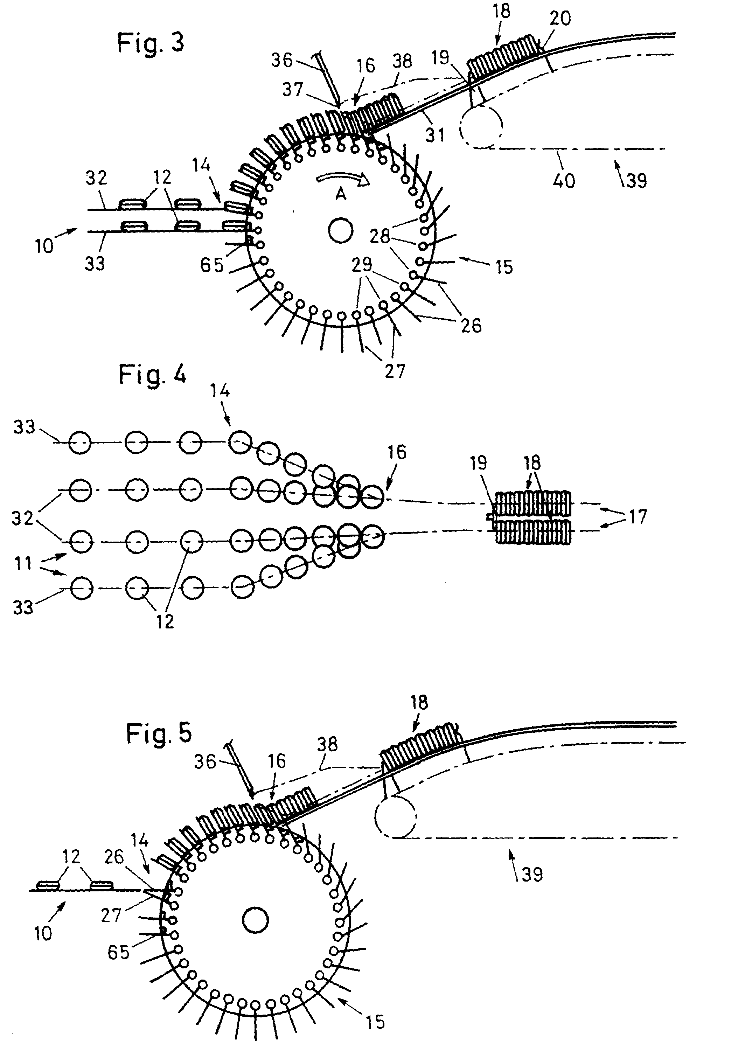

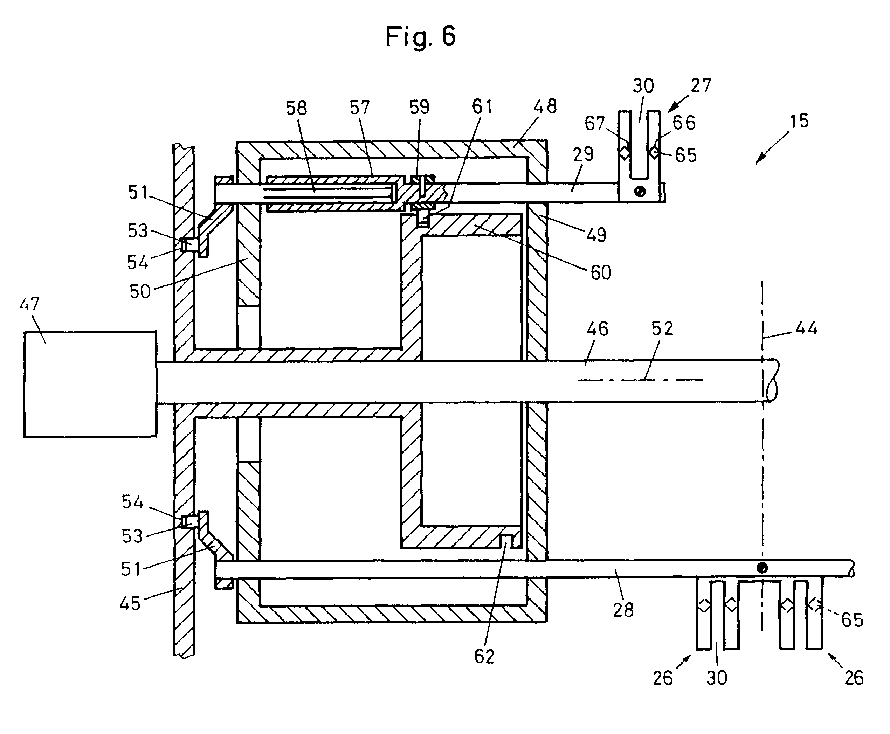

In der Variante nach Fig. 3 und 4 werden aus vier Eingangskolonnen 11 zwei Ausgangskolonnen 17 gebildet. An der Peripherie des Rades 15 sind über den Umfang gleichmässig verteilt Mitnehmer 26, 27 um Schwenkachsen 28, 29 schwenkbar befestigt. Die Mitnehmer 26, 27 haben radiale, nach aussen offene Schlitze 30 (Fig. 6). In diese Schlitze 30 greift in der Ausgangsstation 16 ein Führungsblech 31, auf welchem sich die Unterkante der Produkte 12 abstützt. Die Mitnehmer 26, 27 sind in der Eingangsstation 14 radial gerichtet und werden gegen die Ausgangsstation 16 zurückgeschwenkt, so dass sie dort etwa senkrecht zu dem in einem flachen Winkel von etwa 15° ansteigenden Blech 31 gerichtet sind. Beim Weiterdrehen des Rades 15 werden sie zwischen benachbarten Produkten 12 der sich bildenden Gruppe 18 herausgezogen und anschliessend wieder radial ausgerichtet. Die äussersten beiden Mitnehmerkolonnen sind gegenüber den mittleren beiden im Umfangrichtung um die Teilung der Mitnehmer 26, 27 versetzt. Den gleichen Versatz haben auch die mittleren beiden Zufuhrbahnen 32 des Zufuhrförderers 10 gegenüber den äusseren beiden Bahnen 33. Die auf dem Rad 15 äussersten Mitnehmer 27 sind seitlich verschiebbar. Während der Transportbewegung von der Station 14 zur Station 16 werden sie in die Umlaufebene der anderen Mitnehmer 26 verschoben, so dass in der Ausgangsstation 16 Gruppen 18 von Produkten 12 aus zwei nebeneinanderliegenden Eingangskolonnen 11 gebildet werden.

Aus der Ausgangsstation 16 werden die Gruppen 18 zunächst durch einen Schieber 36 ausgeschoben, der annähernd senkrecht zum Blech 31 angeordnet ist und dessen Stirnende 37 in einer Umlaufbahn 38 derart umläuft, dass es nach einer vorbestimmten Anzahl von Produkten 12 in der sich bildenden Gruppe 18 in den Schlitz 30 des betreffenden Mitnehmers 26, 27 eintaucht und gleichzeitig synchron mit der Umlaufgeschwindigkeit der Mitnehmer 26, 27 in der Station 16 in Richtung des Bleches 31 vorgeschoben wird. Der Bewegungsablauf und die Mittel zum Bewegen des Schiebers 36 können z.B. gemäss der CH-PS 641 416 ausgebildet sein. Alternativ könnte der Schieber 36 auch an zwei versetzt zueinander angeordneten, auf je einer Bahn entsprechend der Bahn 38 umlaufenden, synchron angetriebenen Ketten befestigt sein. Vom Schieber 36 wird die Gruppe 18 einem weiteren Förderer 39 mit einer umlaufenden Kette 40 übergeben, an welcher die Schieber 19 und Gegenhalter 20 befestigt sind.

Bei der Variante nach Fig. 5 sind alle Zufuhrbahnen 32, 33 auf der selben Ebene. Dafür werden bei der Eingangsstation 14 jeweils die äusseren Mitnehmer 27 so hochgeschwenkt, dass ihre Stirnenden mit den Stirnenden der unmittelbar vorangehenden, mittleren beiden Mitnehmer 26 fluchten.

In Fig. 6 ist die Hälfte eines Axialschnittes durch das Rad 15 dargestellt. Die andere Hälfte des Rades 15 ist spiegelsymmetrisch zur Mittelebene 44. In einem Gestell 45 ist die Antriebswelle 46 des Rades 15 drehbar und axial unverschiebbar gelagert. Sie wird durch einen Motor 47 angetrieben. Ein rohrförmiger Träger 48 mit radialen Flanschen 49, 50 ist drehfest und axial unverschiebbar mit der Welle 46 verbunden. In den Flanschen 49, 50 sind die Schwenkachsen 28 für die mittleren Mitnehmer 26 drehbar und axial unverschiebbar befestigt. An den Achsen 28 sind die mittleren beiden Mitnehmer 26 festgeschraubt. Am einen Ende ist auf der Achse 28 ein Hebelarm 51 starr befestigt, der am freien Ende eine parallel zur Achse 52 der Welle 46 drehbar gelagerte Rolle 53 trägt. Die Rolle 53 läuft in einer nutförmigen Führungskurve 54, welche die Schwenkbewegung der Mitnehmer 26, 27 steuert. Die andere Achse 29, an welcher ein äusserer Mitnehmer 27 befestigt ist, ist im Flansch 49 drehbar und axial verschiebbar gelagert. Sie geht am anderen Ende in eine Keilhülse 57 über, in welche eine im Flansch 50 drehbar gelagerte Mehrkeilwelle 58 drehfest eingreift. An dieser ist am anderen Ende ein weiterer Hebelarm 51 mit Rolle 53 befestigt, welche in der Führungskurve 54 läuft. Auf der Achse 29 ist ein Führungsschuh 59 schwenkbar aber axial unverschiebbar befestigt. Der Schuh 59 hat eine konkave Fläche, die am Aussenumfang eines gehäusefesten Zylinders 60 anliegt. Am Schuh 59 ist eine Rolle 61 drehbar gelagert, welche in eine nutförmige Führungskurve 62 in der Aussenfläche des Zylinders 60 eingreift. Die Kurve 62 steuert die axiale Bewegung der Mitnehmer 27.

Alle Mitnehmer 26, 27 haben Anschläge 65 mit einer radial nach aussen gerichteten Anschlagkante 66 und einer gegen den anderen Anschlag 65 des selben Mitnehmers 26, 27 gerichteten Anschlagfläche 67. Im Betrieb stösst eine Stirnkante der Produkte 12 bei rechteckigen Produkten gegen die Kanten 66 und bei runden Produkten gegen die Flächen 67. Damit sind die Produkte 12 bei der seitlichen Verschiebung sicher geführt, ohne dass zusätzliche Führungselemente benötigt werden. Dies erleichtert die Formatumstellung.

Die Vorrichtung ermöglicht eine schonende Behandlung der Produkte. Die Relativbewegungen zwischen Produkten und Führungselementen sind reduziert. Die Vorrichtung hat eine hohe Leistung. Formatumstellungen sind einfach möglich. Die Vorrichtung hat einen geringen Platzbedarf und ist sicher in ihrer Funktion. Die Linien-Reduktion bei guter Übersichtlichkeit ist einfach möglich.

## Patentansprüche

1. Verfahren zum Transportieren von Gruppen von scheibenförmigen Produkten (12), insbesondere Biskuits, welche flach in mehreren Eingangskolonnen (11) einem Fördermittel (15) mit schwenkbaren Mitnehmern (26, 27) zugeführt und auf Kanten stehend durch das Fördermittel (15) zu einer Ausgangsstation (16) gefördert werden, in welcher Gruppen (18) von flachseitig aneinanderliegenden Produkten (12) gebildet werden, wobei die Gruppen (18) mittels eines Sammelschiebers (36, 19) weitertransportiert werden, dadurch gekennzeichnet, dass aufeinanderfolgende Mitnehmer (26, 27) des Fördermittels (15) mit Produkten (12) von mindestens zwei nebeneinander zugeführten Eingangskolonnen (11) beschickt werden, und dass jeweils einer der aufeinanderfolgenden Mitnehmer (26, 27) während der Vorschubbewegung des Fördermittels (15) seitlich verschoben wird, um aus den mindestens zwei Eingangskolonnen (11) gemeinsame Gruppen (18) in der Ausgangsstation (16) zu bilden.

2. Vorrichtung zur Durchführung des Verfahrens nach Anspruch 1, umfassend einen Zufuhrförderer (10) zum Zuführen mehrerer Eingangskolonnen (11) von scheibenförmigen Produkten (12), ein Fördermittel (15) mit schwenkbaren Mitnehmern (26, 27) zum Transport der Produkte (12) von einer Eingangsstation (14), in welcher die Produkte (12) vom Zufuhrförderer (10) auf die Mitnehemer (26, 27) schiebbar sind in eine Ausgangsstation (16) in welcher Gruppen (18) von flachseitig aneinanderliegenden Produkten (12) gebildet werden, sowie einen Sammelschieber (36, 19) zum Weitertransport der Gruppen (18), dadurch gekennzeichnet, dass auf dem Fördermittel (15) mindestens zwei Kolonnen von Mitnehmern (26, 27) in Förderrichtung (A) gegeneinander versetzt angeordnet sind, und dass während des Transports von der Eingangs- zur Ausgangsstation die Mitnehmer (27) mindestens der einen Mitnehmerkolonne durch Verschiebemittel (61, 62) quer zur Transportrichtung (A) verschiebbar sind, um aus den mindestens zwei Eingangskolonnen (11) in der Ausgangsstation (16) gemeinsame Gruppen (18) zu bilden.

3. Vorrichtung nach Anspruch 2, wobei das Fördermittel (15) ein drehbares Rad umfasst, an dessen Peripherie die Mitnehmer (26, 27) angelenkt sind, wobei die mindestens zwei Eingangskolonnen (11) an der Eingangsstation (14) in Förderrichtung (A) des Fördermittels (15) gegeneinander versetzt sind.

4. Vorrichtung nach Anspruch 2 oder 3, wobei jeder Mitnehmer (26, 27) mindestens einen Anschlag (65) aufweist, gegen welchen die Peripherie der Produkte (12) anliegt.

5. Vorrichtung nach Anspruch 4, wobei jeder Mitnehmer (26, 27) zwei voneinander beabstandete Anschläge (65) hat, die vorzugsweise eine Anschlagkante (66) für einen Rand eines rechteckigen Produktes (12) und eine dem anderen Anschlag (65) zugewandte Anschlagfläche (67) für runde Produkte (12) aufweisen.

6. Vorrichtung nach einem der Ansprüche 2 bis 5, wobei jeder Mitnehmer (26, 27) einen Schlitz aufweist, durch welchen in der Ausgangsstation (16) Sammelmittel (31, 36) durchgreifen.

7. Vorrichtung nach einem der Ansprüche 2 bis 6, wobei sich seitlich unverschiebbare und seitlich verschiebbare Mitnehmer (26, 27) in Förderrichtung (A) abwechselnd folgen.

8. Vorrichtung nach einem der Ansprüche 2 bis 7, wobei der Sammelschieber (36, 19) annähernd die gleiche Transportrichtung hat wie die Eingangskolonnen (11).

9. Vorrichtung nach einem der Ansprüche 2 bis 8, wobei der Sammelschieber (36, 19) an der Ausgangsstation (16) eine ansteigende und daran anschliessend eine horizontale Förderrichtung hat.

## Revendications

1. Procédé pour transporter des groupes de produits en forme de disques (12), en particulier des biscuits, qui sont amenés à plat en plusieurs colonnes d'entrée (11) à un moyen d'acheminement (15) avec des moyens d'entraînement pivotants (26, 27) et sont acheminés sur leur bord par le moyen d'acheminement (15) vers un poste de sortie (16), dans lequel sont formés des groupes (18) de produits (12) juxtaposés par leurs faces, les groupes (18) étant encore transportés au moyen d'un coulisseau collecteur (36, 19), caractérisé en ce que des éléments d'entraînement successifs (26, 27) du moyen d'acheminement (15) sont chargés de produits (12) provenant d'au moins deux colonnes d'entrée (11) amenées l'une à côté de l'autre, et en ce qu'à chaque fois l'un des moyens d'entraînement successifs (26, 27) pendant le mouvement d'avance du moyen d'acheminement (15) est déplacé latéralement, afin de former à partir d'au moins deux colonnes d'entrée (11) des groupes communs (18) dans le poste de sortie (16).

2. Dispositif pour réaliser le procédé selon la revendication 1, comprenant un convoyeur d'amenée (10) pour amener plusieurs colonnes d'entrée (11) de produits en forme de disques (12), un moyen d'acheminement (15) avec des moyens d'entraînement pivotants (26, 27) pour le transport des produits (12) depuis un poste d'entrée (14), dans lequel les produits (12) peuvent être poussés par le convoyeur d'amenée (10) sur les moyens d'entraînement (26, 27), dans un poste de sortie (16) dans lequel des groupes (18) de produits juxtaposés par leurs faces (12) sont formés, ainsi qu'un coulisseau collecteur (36, 19) pour le transport supplémentaire des groupes (18), caractérisé en ce que sur le moyen d'acheminement (15) sont disposées au moins deux colonnes de moyens d'entraînement (26, 27) dans la direction d'acheminement (A) de manière décalée l'une par rapport à l'autre, et en ce que pendant le transport du poste d'entrée au poste de sortie, les moyens d'entraînement (27) d'au moins une colonne de moyens d'entraînement sont déplaçables par des moyens de déplacement (61, 62) transversalement à la direction de transport (A), afin de former à partir des au moins deux colonnes d'entrée (11) dans le poste de sortie (16) des groupes communs (18).

3. Dispositif selon la revendication 2, dans lequel le moyen d'acheminement (15) comprend une roue rotative, à la périphérie de laquelle les moyens d'entraînement (26, 27) sont articulés, les au moins deux colonnes d'entrée (11) étant décalées l'une par rapport à l'autre sur le poste d'entrée (14) dans la direction d'acheminement (A) du moyen d'acheminement (15).

4. Dispositif selon la revendication 2 ou 3, dans lequel chaque moyen d'entraînement (26, 27) présente au moins une butée (65), contre laquelle repose la périphérie des produits (12).

5. Dispositif selon la revendication 4, dans lequel chaque moyen d'entraînement (26, 27) a deux butées (65) écartées l'une de l'autre, qui présentent de préférence une arête de butée (66) pour un bord d'un produit rectangulaire (12) et une surface de butée (67) tournée vers l'autre butée (65) pour des produits ronds (12).

6. Dispositif selon l'une quelconque des revendications 2 à 5, dans lequel chaque moyen d'entraînement (26, 27) présente une fente à travers laquelle les moyens collecteurs (31, 36) viennent en prise dans le poste de sortie (16).

7. Dispositif selon l'une quelconque des revendications 2 à 6, dans lequel des moyens d'entraînement (26, 27) non déplaçables latéralement et déplaçables latéralement se suivent en alternance dans la direction d'acheminement (A).

8. Dispositif selon l'une quelconque des revendications 2 à 7, dans lequel le coulisseau collecteur (36, 19) a approximativement la même direction de transport que les colonnes d'entrée (11).

9. Dispositif selon l'une quelconque des revendications 2 à 8, dans lequel le coulisseau collecteur (36, 19) au niveau du poste de sortie (16) a une direction d'acheminement montante puis horizontale.

## Claims

1. Method for the transportation of groups of discoid products (12), in particular biscuits, which are supplied in a flat manner in a plurality of input columns (11) to a conveying means (15) having pivotable carriers (26, 27) and, standing on edges, are conveyed by the conveying means (15) to an output station (16) in which groups (18) of products (12) bearing against one another on their flat sides are formed, the groups (18) being transported further by means of a collecting slider (36, 19), characterized in that successive carriers (26, 27) of the conveying means (15) are loaded with products (12) from at least two input columns (11) supplied next to one another, and in that in each case one of the successive carriers (26, 27) is displaced laterally during the advancing movement of the conveying means (15) in order to form combined groups (18) from the at least two input columns (11) in the output station (16).

2. Device for carrying out the method according to Claim 1, comprising a supply conveyor (10) for supplying a plurality of input columns (11) of discoid products (12), a conveying means (15) having pivotable carriers (26, 27) for transporting the products (12) from an input station (14), in which the products (12) from the supply conveyor (10) can be pushed onto the carriers (26, 27), into an output station (16) in which groups (18) of products (12) which bear against one another on their flat sides are formed, and also comprising a collecting slider (36, 19) for further transporting the groups (18), characterized in that on the conveying means (15) at least two columns of carriers (26, 27) are arranged offset with respect to one another in the conveying direction (A), and in that during the transportation from the input station to the output station, the carriers (27) at least of the one carrier column can be displaced transversely to the transportation direction (A) by displacement means (61, 62) in order to form combined groups (18) from the at least two input columns (11) in the output station (16).

3. Device according to Claim 2, the conveying means (15) comprising a rotatable wheel with the carriers (26, 27) coupled to its periphery, the at least two input columns (11) being offset with respect to one another in the conveying direction (A) of the conveying means (15) at the input station (14).

4. Device according to Claim 2 or 3, each carrier (26, 27) having at least one stop (65) against which the periphery of the products (12) bears.

5. Device according to Claim 4, each carrier (26, 27) having two stops (65) which are spaced apart from each other and preferably have one stop edge (66) for one side of a rectangular product (12) and a stop surface (67), which faces the other stop (65), for round products (12).

6. Device according to one of Claims 2 to 5, each carrier (26, 27) having a slot through which collecting means (31, 36) reach in the output station (16).

7. Device according to one of Claims 2 to 6, laterally non-displaceable and laterally displaceable carriers (26, 27) alternating in the conveying direction (A).

8. Device according to one of Claims 2 to 7, the collecting slider (36, 19) having approximately the same transportation direction as the input columns (11).

9. Device according to one of Claims 2 to 8, the collecting slider (36, 19) having a rising and subsequently a horizontal conveying direction at the output station (16).
